# EUROPÄISCHE PATENTSCHRIFT

(11) **EP 2 401 583 B1**
(45) Veröffentlichungstag und Bekanntmachung des Hinweises auf die Patenterteilung: **20.01.2016**
(21) Anmeldenummer: 10702033.1
(22) Anmeldetag: 20.01.2010
(51) Int. Cl.: G01C 21/36

(54) **KRAFTFAHRZEUG-NAVIGATIONSSYSTEM**
MOTOR VEHICLE NAVIGATION SYSTEM
SYSTÈME DE NAVIGATION POUR VÉHICULE À MOTEUR

(30) Priorität: 28.02.2009 DE 102009011014
(43) Veröffentlichungstag der Anmeldung: 04.01.2012
(73) Patentinhaber: Bayerische Motoren Werke Aktiengesellschaft, 80809 München (DE)
(72) Erfinder: TAVA, Marcello, 81369 Muenchen (DE); PLATZER, Edna, 80686 Muenchen (DE); STEINS, Wilfried, 85737 Ismaning (DE)
(86) Internationale Anmeldenummer: PCT/EP2010/000313
(87) Internationale Veröffentlichungsnummer: WO 2010/097144

(56) Entgegenhaltungen:
- EP-A2- 0 704 675
- EP-A2- 0 775 891
- JP-A- 2004 226 168

## Beschreibung

Die Erfindung betrifft ein Kraftfahrzeug-Navigationssystem.

Mit Navigationssystemen ist es möglich, eine Route zwischen einem Start-punkt und einem Zielpunkt zu berechnen. Dabei ist es bekannt, Verkehrsstörungen meldende Verkehrsnachrichten zu empfangen und diese in Listenform anzuzeigen oder entsprechende Symbole der Darstellung einer digitalen Straßenkarte zu überlagern.

Es stellte sich dabei als Nachteil heraus, dass bei einer Darstellung der digitalen Karte in kleinem Maßstab, also bei schwacher Verkleinerung, vom aktuellen Aufenthaltsort weiter entfernte Verkehrsstörungen auf der Kartendar-stellung nicht angezeigt werden können. Erfolgt die Darstellung der digitalen Karte in größerem Maßstab, also bei stärkerer Verkleinerung, werden so viele Symbole auf der Straßenkartendarstellung angezeigt, dass ein Nutzer den Überblick verliert. Außerdem ist dann der genaue Ort, die Art und die Schwere der Verkehrsstörungen häufig nicht mehr zu erfassen.

Es ist auch bekannt, an der Anzeigeeinrichtung eines Navigationssystems so genannte Points of Interest in textueller Listenform anzuzeigen.

Aus der EP0704675 A1, der JP2004226168 A und der EP0775891A2 ist es bekannt, eine Liste von ortsbasierten Informationsobjekten darzustellen, und nach Auswahl eines Informationsobjektes einen entsprechenden Ausschnitt einer digitalen Straßenkarte anzuzeigen.

Der Erfindung liegt nun die Aufgabe zugrunde, ein verbessertes Kraftfahr-zeug-Navigationssystem anzugeben.

Diese Aufgabe wird durch die Merkmale des unabhängigen Anspruchs gelöst. Vorteilhafte Weiterbildungen der Erfindung sind den abhängigen Ansprüchen zu entnehmen.

Ein erfindungsgemäßes Kraftfahrzeug-Navigationssystem, das beispielsweise ein GPS-Modul, eine Anzeigeeinrichtung, eine Bedieneinrichtung und eine Prozessoreinrichtung umfasst, ist derart eingerichtet, dass in einem ersten Betriebszustand in einem Anzeigebereich, insbesondere der Anzeigeeinrich tung, eine insbesondere textuelle Liste von ortsbasierten Informationsobjekten (Ortsinformationsobjekt), insbesondere Verkehrsnachrichten, Sehenswürdigkeiten, Points of Interest, Adressen und/oder zuletzt ausgewählte Zielorten, angezeigt wird, und dass als unmittelbare oder mittelbare Reaktion auf die Auswahl eines ortsbasierten Infrormationsobjektes durch den Nutzer in einen zweiten Betriebszustand umgeschaltet wird, in welchem in dem Anzeigebereich der Ausschnitt einer digitalen Straßenkarte angezeigt wird, auf den sich das ausgewählte ortsbasierte Informationsobjekt bezieht. Im zweiten Betriebszustand ist vorgesehen, dass durch aufeinanderfolgende zweite, insbesondere im Wesentlichen identische, Bedienaktionen durch die Ausschnitte der digitalen Straßenkarte, auf welche sich die ortsbasierten Informationsobjekte beziehen, geblättert wird, insbesondere entsprechend der Reihenfolge der zugeordneten Listeneinträge (Ortsinformationsobjekte).

Ein ortsbasiertes Informationsobjekt kann eine textuelle oder grafische Beschreibung, beispielsweise eines Ortes oder eines POI (Point of Interest) umfassen. Einem oder jedem ortsbasierten Informationsobjekt ist vorzugsweise jeweils eine Ortsinformation, wie beispielsweise eine Adresse oder ein Ortskoordinatenpaar oder ein Straßenabschnitt, zugeordnet. Als Reaktion auf die Auswahl eines Ortsinformationsobjektes und das Umschalten in den zweiten Betriebszustand wird vorzugsweise ein Ausschnitt einer digitalen Straßenkarte angezeigt, der den - dem Ortsinformationsobjekt zugeordneten - Ort enthält. Besonders bevorzugt bestimmt dieser Ort das Zentrum des dargestellten Ausschnittes einer digitalen Straßenkarte.

Die Auswahl eines ortsbasierten Informationsobjektes durch den Nutzer kann beispielsweise eine - auf ein ortsbasiertes Informationsobjekt oder einen Teil eines ortsbasierten Informationsobjektes bezogene - Markieraktion und/oder eine Auswahlaktion und/oder eine Bestätigungsaktion und/oder eine Umschaltaktion (beispielsweise in den zweiten Betriebszustand) umfassen.

Durch die Erfindung wird erreicht, dass einem Nutzer auch mittels einer relativ kleinen Anzeigeeinrichtung der Bezug zwischen in einer Listenform dargestellten ortsbasierten Informationsobjekten und den jeweils zugehörigen Kartendarstellungen auf einfache und verständliche Art vermittelt werden kann.

Bei einem bevorzugten Kraftfahrzeug-Navigationssystem wird im ersten Betriebszustand durch aufeinanderfolgende erste, insbesondere im Wesentlichen identische, Bedienaktionen durch die Liste der ortsbasierten Informationsobjekte (Listeneinträge) gescrolled, d.h. es werden aufeinanderfolgende oder untereinander dargestellte Listeneinträge der Reihe nach markiert oder ausgewählt.

Vorzugsweise sind die erste und zweite Bedienaktion identisch. Es handelt sich beispielsweise um die Drehung eines Bedienelementes in eine Drehrichtung und/oder um eine vorgegebene Drehachse. Dadurch wird der Zusammenhang zwischen Listendarstellung und Kartendarstellung in der Wahrnehmung eines Nutzers weiter verstärkt

Vorzugsweise werden durch eine Drehung eines Bedienelementes im Uhrzeigersinn im ersten Betriebszustand der Reihe nach ortsbasierte Informationsobjekte markiert, beginnend mit einem ortsbasierten Informationsobjekt, dessen zugeordneter Ort dem aktuellen Standort des Fahrzeuges näher ist als die im Folgenden markierten ortsbasierten Informationsobjekte. Durch eine Drehung des Bedienelementes entgegen dem Uhrzeigersinn werden im ersten Betriebszustand beispielsweise der Reihe nach ortsbasierte Informationsobjekte markiert, beginnend mit einem ortsbasierten Informationsobjekt, dessen zugeordneter Ort vom aktuellen Standort entfernter ist als die im Folgenden markierten ortsbasierten Informationsobjekte.

Alternativ oder ergänzend werden vorzugsweise durch eine Drehung eines Bedienelementes im Uhrzeigersinn im zweiten Betriebszustand der Reihe nach Ausschnitte der digitalen Straßenkarte, die jeweils einem Listeneintrag zugeordnet sind, dargestellt, beginnend mit einem Ausschnitt der digitalen Straßenkarte, der dem aktuellen Standort des Fahrzeuges näher ist als die im Folgenden dargestellten Ausschnitte der digitalen Straßenkarte. Durch eine Drehung des Bedienelementes entgegen dem Uhrzeigersinn werden im zweiten Betriebszustand beispielsweise der Reihe nach Ausschnitte der digitalen Straßenkarte, die jeweils einem Listeneintrag zugeordnet sind, dargestellt, beginnend mit einem Ausschnitt der digitalen Straßenkarte, der zum aktuellen Standort des Fahrzeuges entfernter ist als die im Folgenden dargestellten Ausschnitte der digitalen Straßenkarte. Die Reihenfolge der dargestellten Ausschnitte der digitalen Straßenkarte entspricht vorzugsweise der Reihenfolge der entsprechenden ortsbasierten Informationsobjekte in der Listendarstellung.

Es ist eine Weiterbildung der Erfindung, dass im zweiten Betriebszustand dem dargestellten Ausschnitt der digitalen Straßenkarte zugeordnet oder überlagert ganz oder teilweise das ortsbasierte Informationsobjekt, das sich auf den dargestellten Ausschnitt der digitalen Straßenkarte bezieht, angezeigt wird. Dadurch wird der Bezug zwischen Informationsobjekt und dargestelltem Ausschnitt der digitalen Straßenkarte im zweiten Betriebszustand noch klarer.

Das Umschalten vom ersten in den zweiten Betriebszustand wird vorzugsweise durch eine dritte Bedienaktion ausgelöst, und das Umschalten vom zweiten in den ersten Betriebszustand durch eine vierte Bedienaktion ausgelöst. Die vierte Bedienaktion ist vorteilhafterweise in bediendynamischer Hinsicht invers zur dritten Bedienaktion. Beispielsweise umfasst die dritte Bedienaktion eine translatorische Bewegung eines Bedienelements nach rechts und die vierte Bedienaktion eine translatorische Bewegung des Bedienelementes nach links. Dies führt zu einer intuitiven Bedienung eines erfindungsgemäßen Navigationssystems.

Besonders bevorzugt ist vorgesehen, dass nach einem Blättern durch Ausschnitte der digitalen Straßenkarte im zweiten Betriebszustand und nach einem anschließenden Umschalten in den ersten Betriebszustand automatisch das ortsbasierte Informationsobjekt markiert oder ausgewählt ist, das sich auf den im zweiten Betriebszustand zuletzt dargestellten Ausschnitt der digitalen Straßenkarte bezieht.

Dadurch wird die Orientierung innerhalb der Listendarstellung trotz der zwischenzeitlichen Umschaltung in den zweiten Betriebszustand vereinfacht.

Im Folgenden wird die Erfindung anhand von Beispielen unter Bezugnahme auf die folgenden Figuren näher erläutert:
- Figur 1: zeigt eine Darstellung von POIs auf der Anzeigeeinrichtung eines Navigationssystems (erster Betriebszustand);
- Figur 2: zeigt eine Darstellung eines Straßenkartenausschnittes auf der Anzeigeeinrichtung eines Navigationssystems (zweiter Betriebszustand).

Es wird von einem an sich bekannten Kraftfahrzeug-Navigationssystem ausgegangen, das beispielsweise in der Lage ist, Points of Interest (POIs) zu speichern oder Verkehrsnachrichten zu empfangen. Eine Verkehrsnachricht umfasst ein Ortsinformationsobjekt oder ist Teil eines Ortsinformationsobjektes und ist beispielsweise bestimmt durch Informationen über den Ort der Verkehrsstörung und Informationen über die Art der Verkehrsstörung. Auch ein Point of Interest umfasst ein Ortsinformationsobjekt oder ist Teil eines Ortsinformationsobjektes und ist beispielsweise bestimmt durch Informationen über den Ort des Point of Interest und Informationen über die Art des Point of Interest oder Details zum Point of Interest.

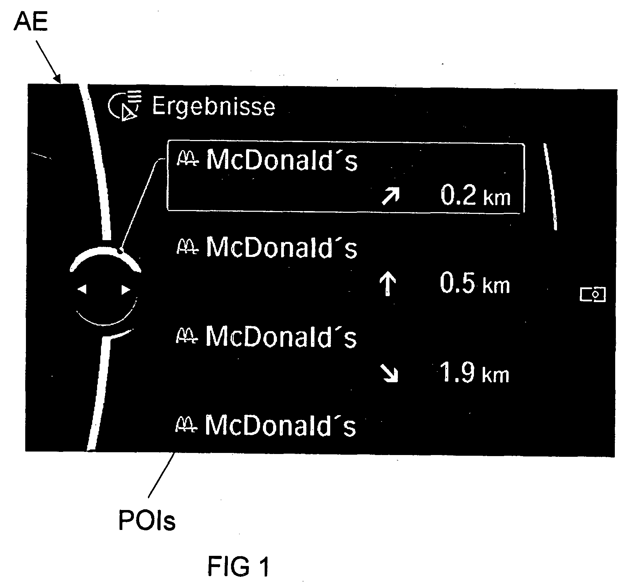

In Figur 1 ist eine Anzeige AE eines Kraftfahrzeug-Navigationssystems in einem ersten Betriebszustand dargestellt. Es sind verschiedene Points of Interest POI gleichzeitig in Form einer Liste dargestellt. Von den Listeneinträgen können dabei je nach Ausführungsbeispiel alle, ein Teil oder immer nur einer gleichzeitig dargestellt werden.

Durch eine oder mehrere Bedienaktionen, die beispielsweise jeweils das Drehen des Bedienelementes um einen vorgegebenen Winkel umfassen, kann durch die Points of Interest gescrolled werden, und ist ein Point of Interest, wie hier beispielsweise der eingerahmte Point of Interest, der sich auf ein Schnellrestaurant in 0,2 km Entfernung bezieht, markierbar.

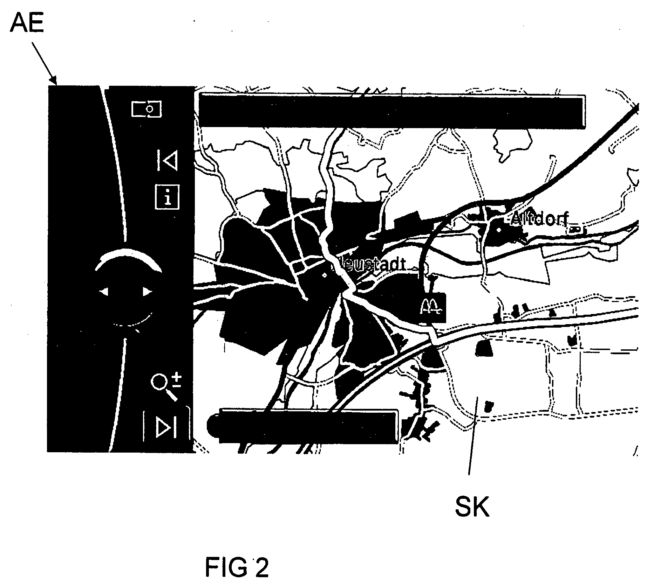

Nach der Markierung dieses Point of Interest wird durch eine weitere Bedienaktion, die beispielsweise ein Schieben oder Kippen des Bedienelementes nach rechts umfasst, von dem ersten Betriebszustand in einen zweiten Betriebszustand umgeschaltet, in dem - wie in Figur 2 dargestellt - auf dem, in etwa, weitgehend oder teilweise, selben Anzeigebereich wie zuvor die Liste der POIs nun ein Ausschnitt einer Straßenkarte SK dargestellt wird. Der dargestellte Ausschnitt der Straßenkarte SK ist dem zuletzt markierten Point of Interest zugeordnet und enthält somit den Ort des zuletzt markierten Point of Interest. Der Ort des zuletzt markierten Point of Interest ist in dem Ausschnitt der Straßenkarte hervorgehoben dargestellt oder beispielsweise durch ein Symbol markiert.

Durch eine oder mehrere Bedienaktionen, die beispielsweise jeweils das Drehen des Bedienelementes um einen vorgegebenen Winkel umfassen, kann durch die Ausschnitte der Straßenkarte geblättert werden, die jeweils einem Point of Interest zugeordnet sind.

Durch eine weitere Bedienaktion, die beispielsweise ein Schieben oder Kippen des Bedienelementes nach links umfasst, wird von dem zweiten Betriebszustand wieder in den ersten Betriebszustand umgeschaltet, in dem wieder die Liste der POIs angezeigt wird. Es ist dabei der POI markiert, beispielsweise eingerahmt, dem der zuletzt im zweiten Betriebszustand angezeigte Ausschnitt der Straßenkarte zugeordnet ist.

## Patentansprüche

1. Kraftfahrzeug-Navigationssystem,
das derart eingerichtet ist,
dass in einem ersten Betriebszustand in einem Anzeigebereich eine Liste von ortsbasierten Informationsobjekten, insbesondere Verkehrsnachrichten, Sehenswürdigkeiten, Points of Interest, Adressen und/oder zuletzt ausgewählten Zielorten, anzeigbar ist,
dass das System, durch eine Auswahl eines ortsbasierten Informationsobjektes in einen zweiten Betriebszustand umschaltbar ist, in welchem in dem Anzeigebereich der Ausschnitt einer digitalen Straßenkarte angezeigt wird, auf den sich das ausgewählte ortsbasierte Informationsobjekt bezieht, und
dass im zweiten Betriebszustand durch aufeinanderfolgende zweite Bedienaktionen durch die Ausschnitte der digitalen Straßenkarte, auf welche sich die ortsbasierten Informationsobjekte beziehen, blätterbar ist.

2. Kraftfahrzeug-Navigationssystem nach Anspruch 1,
das derart eingerichtet ist,
dass die Liste der ortsbasierten Informatiansobjekte im ersten Betriebszustand durch aufeinanderfolgende erste Bedienaktionen scrollbar ist.

3. Kraftfahrzeug-Navigationssystem nach einem der vorhergehenden Ansprüche,
das derart eingerichtet ist,
dass im zweiten Betriebszustand dem dargestellten Ausschnitt der digitalen Straßenkarte zugeordnet oder überlagert ganz oder teilweise das ortsbasierte Informationsobjekt, das sich auf den dargestellten Ausschnitt der digitalen Straßenkarte bezieht, anzeigbar ist.

4. Kraftfahrzeug-Navigationssystem nach einem der vorhergehenden Ansprüche,
das derart eingerichtet ist,
dass das Umschalten vom ersten in den zweiten Betriebszustand durch eine dritte Bedienaktion ausgelöst wird und das Umschalten vom zweiten in den ersten Betriebszustand durch eine vierte Bedienaktion auslösbar ist, die in bediendynamischer Hinsicht invers zur dritten Bedienaktion ist.

5. Kraftfahrzeug-Navigationssystem nach einem der vorhergehenden Ansprüche,
das derart eingerichtet ist,
dass nach einem Blättern durch Ausschnitte der digitalen Straßenkarte im zweiten Betriebszustand und nach einem anschließenden Umschalten in den ersten Betriebszustand automatisch das ortsbasierte Informationsobjekt markiert ist, das sich auf den im zweiten Betriebszustand zuletzt dargestellten Ausschnitt der digitalen Straßenkarte bezieht.

## Claims

1. A navigation system for a motor vehicle which is configured such that in a first operating state, a list of location-based information objects, more especially traffic reports, tourist attractions, points of interest, addresses and/or most recently selected destinations can be displayed in a display region, such that by selecting a location-based information object, the system can be switched over into a second operating state in which the sector of a digital road map, to which the selected location-based information object relates, is displayed in the display region and such that in the second operating state, the sectors of the digital road map to which the location-based information objects relate can be browsed by successive second operating actions.

2. A navigation system for a motor vehicle according to claim 1, which is configured such that it is possible to scroll through the list of location-based information objects in the first operating state by successive first operating actions.

3. A navigation system for a motor vehicle according to either of the preceding claims, which is configured such that in the second operating state, the location-based information object which relates to the displayed sector of the digital road map can be partly or fully displayed, being allocated to or superimposed on the displayed sector of the digital road map.

4. A navigation system for a motor vehicle according to any of the preceding claims, which is configured such that the change-over from the first operating state to the second operating state is triggered by a third operating action, and the change-over from the second operating state to the first operating state can be triggered by a fourth operating action which is inverse to the third operating action from an operationally dynamic point of view.

5. A navigation system for a motor vehicle according to any of the preceding claims, which is configured such that after browsing through sectors of the digital road map in the second operating state and after subsequently changing over to the first operating state, the location-based information object which relates to the sector of the digital road map most recently displayed in the second operating state is automatically marked.

## Revendications

1. Système de navigation pour véhicule automobile réalisé de sorte que, dans un premier état de fonctionnement, on puisse afficher dans un domaine d'affichage, une liste d'objets d'information basés sur le lieu, en particulier des informations routières, des curiosités, des points d'intérêt, des adresses et/ou des lieux cibles dernièrement sélectionnés, que le système puisse, par la sélection d'un objet d'information basé sur le lieu, être commuté dans un second état de fonctionnement dans lequel est affiché, dans le domaine d'affichage, le secteur d'une carte routière numérique concerné par l'objet d'information basé sur le lieu sélectionné, et
que dans le second état de fonctionnement, on puisse feuilleter par des secondes actions de manoeuvre successives, les secteurs de la carte routière numériques concernés par les objets d'information basés sur le lieu.

2. Système de navigation pour véhicule automobile conforme à la revendication 1, réalisé de sorte que dans le premier état de fonctionnement on puisse faire défiler la liste des objets d'information basés sur le lieu par des premières actions de manoeuvres successives.

3. Système de navigation pour véhicule automobile conforme à l'une des revendications précédentes, qui est réalisé de sorte que, dans le second état de fonctionnement, on puisse afficher totalement ou partiellement l'objet d'information basé sur le lieu concerné par le secteur représenté de la carte routière numérique associé ou superposé au secteur de la carte routière numérique représenté.

4. Système de navigation pour véhicule automobile conforme à l'une des revendications précédentes, réalisé de sorte que la commutation du premier au second état de fonctionnement soit déclenchée par une troisième action de manoeuvre et que la commutation du second au premier état de fonctionnement soit déclenchée par une quatrième action de manoeuvre qui, du point de vue de la dynamique de manoeuvre, est l'inverse de la troisième action de manoeuvre.

5. Système de navigation pour véhicule automobile conforme à l'une des revendications précédentes, réalisé de sorte que, après avoir feuilleté les secteurs de la carte routière numérique dans le second état de fonctionnement et effectué ensuite une commutation dans le premier état de fonctionnement, l'objet d'information basé sur le lieu qui concerne le secteur de la carte routière numérique représenté en dernier lieu dans le second état de fonctionnement, est automatiquement repéré.
